Europäisches Patentamt

European Patent Office

Office européen des brevets

(19)

(11) Numéro de publication : **0 112 737**
**B1**

(12) **FASCICULE DE BREVET EUROPÉEN**

(45) Date de publication du fascicule du brevet :
05.03.86

(21) Numéro de dépôt : 83402213.9

(22) Date de dépôt : 17.11.83

(51) Int. Cl.⁴ : **B 01 J 19/00**, B 01 J 19/12,
C 07 C 17/00

(54) **Système perfectionné d'étanchéité dans un appareil chimique entre une enceinte en matériau cassant et des parties métalliques.**

(30) Priorité : 26.11.82 FR 8219840

(43) Date de publication de la demande :
04.07.84 Bulletin 84/27

(45) Mention de la délivrance du brevet :
05.03.86 Bulletin 86/10

(84) Etats contractants désignés :
BE CH DE GB IT LI LU NL

(56) Documents cités :
CH-A-   536 970
DE-A- 2 214 855
FR-A- 2 166 541
FR-A- 2 382 928

(73) Titulaire : **SOCIETE NATIONALE ELF AQUITAINE
(PRODUCTION)**
**Tour Aquitaine**
**F-92400 Courbevoie (FR)**

(72) Inventeur : **Gongora, Henri**
**5 Parc Résidence Chemin Salié**
**F-64140 Lons (FR)**
Inventeur : **Perono, René**
**Résidence Eden Park 2 rue R. de Carbonnières**
**F-64000 Pau (FR)**
Inventeur : **Lalanne, Henri**
**10 rue de Lacq**
**F-64000 Pau (FR)**

(74) Mandataire : **Kohn, Armand**
**5 Avenue Foch**
**F-92380 Garches (FR)**

## Description

La présente invention concerne un système perfectionné d'étanchéité entre une enceinte en matériau cassant et des parties métalliques. Elle se rapporte plus spécialement à des réacteurs comportant une enceinte, tubulaire ou autre, en un matériau cassant tel que verre, quartz ou céramique, raccordée à une chambre ou à une tubulure métallique, comme c'est le cas par exemple dans les réacteurs photochimiques ou dans des appareils utilisant un matériau réfractaire comme chambre de réaction.

Dans certains appareils, pour la réalisation de réactions chimiques, on est obligé d'employer des enceintes en matériau inattaquable par les réactifs en présence, au moins dans une région où la corrosion est le plus à craindre. Dans d'autres appareils, ce sont des enceintes à paroi transparente que l'on utilise, notamment dans les réacteurs photochimiques, très employés pour différentes halogénations d'hydrocarbures, dans la fabrication de mercaptans et même pour quelques polymérisations, le réacteur est alors généralement métallique et contient coaxialement une tubulure en quartz ou en verre spécial, entourant une source lumineuse appropriée. Dans tous ces cas, la partie délicate de l'installation est constituée par la jonction entre le matériau cassant, notamment verre, quartz ou céramique, et la partie métallique de l'appareil. Il faut en effet une bonne étanchéité entre ces deux sortes d'éléments de l'appareil, pour éviter tout passage des matières traitées de l'enceinte cassante vers l'enceinte métallique et vice et versa. La jonction entre les deux sortes de matériau est généralement obtenue par la fixation d'un raccord métallique sur la tête, c'est-à-dire une des extrémités le plus souvent renforcées, du matériau cassant.

Etant donné la fragilité des matériaux vitreux sus-indiqués, un serrage puissant de ce raccord ne peut pas être appliqué comme il l'est entre pièces métalliques ; on est obligé de se contenter du rôle des joints élastoplastiques pour assurer l'étanchéité.

On connaît une telle disposition par la publication FR 2 382 928 qui décrit un appareil dans lequel, d'après le dessin, des joints toriques sont placés angulairement entre la paroi latérale d'un tube en quartz ou en verre et les brides de fixation du tube. D'autre part, selon le brevet CH 536 970 un ensemble d'étanchéité, composé de trois joints toriques superposés, est inséré entre la paroi extérieure d'un tube de verre et sa bride de fixation : ces joints sont comprimés par vissage d'un presse-étoupe. Cependant, le danger de fuites à travers les surfaces de jonction entre le matériau cassant et le métal subsiste donc dans une certaine mesure et il devient particulièrement sensible lorsque l'appareil doit fonctionner sous pression. Or, ce danger devient très grave, lorsque les réactifs traités dans les parties métalliques peuvent réagir avec le contenu de l'enceinte cassante pour provoquer éventuellement une explosion. Tel est justement le cas lorsqu'on est en présence d'hydrocarbures ou/et d'hydrogène sulfuré, d'halogène, d'anhydride sulfureux, etc.

La présente invention apporte un perfectionnement sensible à l'établissement de l'étanchéité entre les parties de l'appareil en matériau cassant et celles qui sont construites en métal ; elle supprime les dangers de passage des réactifs de l'une à l'autre de ces deux zones, tout en évitant efficacement les fuites des réactifs vers l'extérieur de l'appareil. Elle permet la réalisation d'un réacteur pouvant fonctionner sous des pressions pouvant atteindre 25 bars.

Suivant une première caractéristique de l'invention, en plus du joint habituel, inséré entre le raccord métallique et la portée de la tête de l'enceinte cassante, le système d'étanchéité, suivant l'invention, comprend un joint torique entourant la paroi latérale de cette tête ; ce joint supplémentaire est serré par l'alésage du raccord dans une région située entre les deux bouts de celui-ci, de préférence au voisinage du milieu de l'alésage.

Le raccord métallique, employé conformément à l'invention, présente de préférence un épaulement annulaire, dans son alésage, pour servir de logement au joint torique supplémentaire susmentionné.

Suivant un autre trait important de l'invention, le système d'étanchéité est muni d'un dispositif pour la compression indépendante du joint supplémentaire, après la fixation du raccord enserrant ce joint.

De préférence, le dispositif de compression, suivant l'invention, est monté de façon à comprimer également le joint classique qui se trouve sur la portée de l'enceinte en matériau cassant, entre celle-ci et le fond du raccord. Ainsi, dans l'appareil suivant l'invention, le joint classique est comprimé par ce dispositif indépendant au lieu de l'être par le fond du raccord.

Selon un autre trait préféré de l'invention, un joint complémentaire est placé entre l'extrémité inférieure du raccord et l'enceinte cassante.

Le joint classique, ainsi que celui qui se trouve à l'extrémité inférieure du raccord, sont placés de préférence sur des troncatures périphériques de la tête de l'enceinte cassante.

Bien que les joints puissent être constitués à la manière connue, par les différentes matières plus ou moins plastiques, telles que cuir, caoutchouc, polymère vinylique, etc., une forme de joint particulièrement efficace, notamment dans le cas de la fabrication photochimique de mercaptans sous pression, est constituée par une association d'une âme de silicone et du polytétra fluoro éthylène entourant cette âme.

L'invention sera mieux comprise à la lumière de la description, qui suit, d'un schéma général et d'une forme d'exécution particulière.

Figure 1 est une coupe schématique axiale d'un appareil classique comportant une enceinte cassante, entourée d'une chambre métallique.

Figure 2 représente, en coupe axiale, la partie supérieure d'un photoréacteur muni des joints d'étanchéité suivant l'invention.

Figure 3 montre, également en coupe axiale, le détail d'une partie de la figure 2.

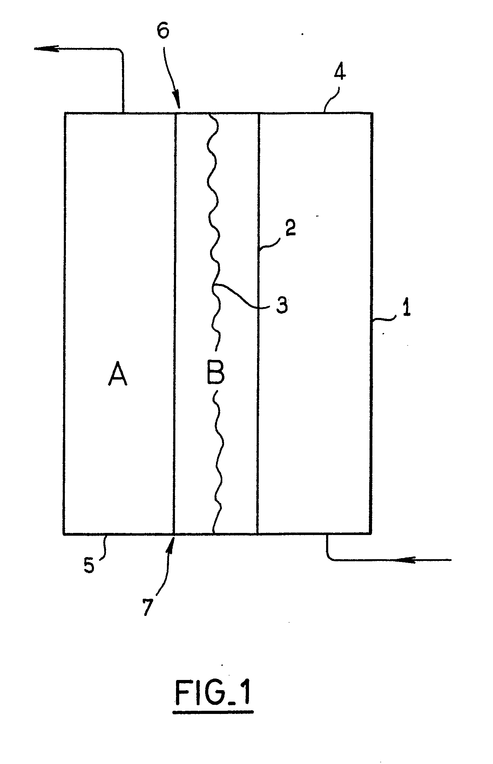

Dans le cas très général de la figure 1, un réacteur cylindrique 1, en métal approprié, est parcouru intérieurement par le ou les réactifs qu'il s'agit de faire réagir sous l'effet de la lumière émise par une source 3 au sein de l'espace réactionnel. L'entrée et la sortie de ces réactifs sont figurées par des flèches. La source de lumière 3, qui peut être un filament chauffé électriquement, une flamme d'un brûleur à hydrocarbures ou à hydrogène, ou bien une décharge électrique au sein d'un gaz, se trouve dans une enceinte tubulaire 2, transparente. Le plus souvent, le matériau 2 est du quartz ou un verre spécial. La lampe à mercure en est l'exemple le plus fréquent. Les repères 4 et 5 désignent respectivement les fermetures supérieures et inférieures de l'appareil ; c'est au niveau de ces fermetures, notamment dans les régions 6 et 7, que se trouve la jonction entre l'enceinte, en quartz par exemple, 2, et l'élément métallique de fermetures 4 et 5. C'est donc là dans ces régions 6 et 7 qu'il convient d'établir une étanchéité convenable, pour que le milieu réactionnel A ne puisse pas communiquer avec l'intérieur B de l'enceinte 2.

Dans certains cas de réactions photochimiques, la lampe 2 est raccordée seulement en 6 et forme une sorte d'ampoule dans l'espace A, ce qui fait qu'il n'y a pas de jonction avec le métal 7 dans la fermeture 5. Ainsi, l'étanchéité entre le quartz et le métal est à établir aux deux extrémités du tube 2, ou bien seulement à l'extrémité supérieure de celui-ci. Il en résulte que les dispositions suivant la présente invention s'appliquent, selon les cas industriels envisagés, aux deux bouts de l'enceinte 2 ou seulement à une des extrémités de celle-ci.

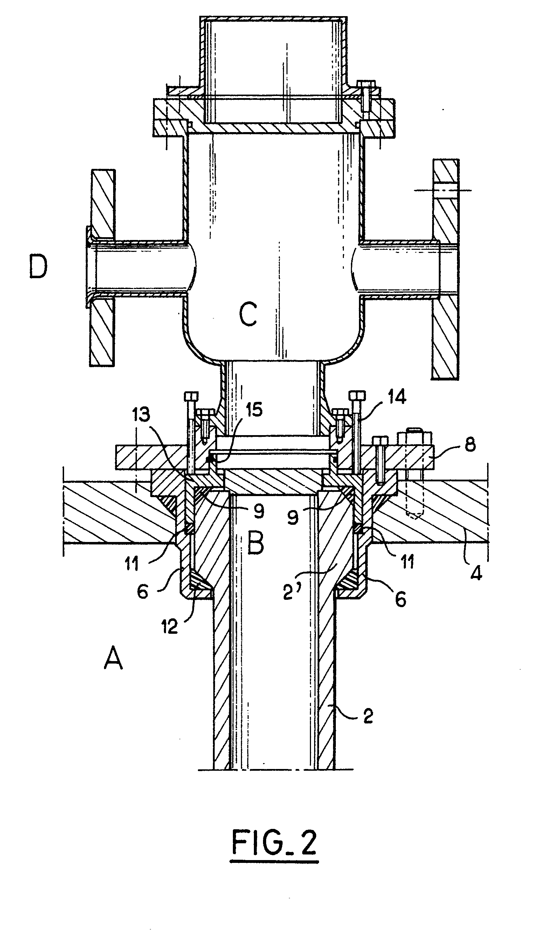

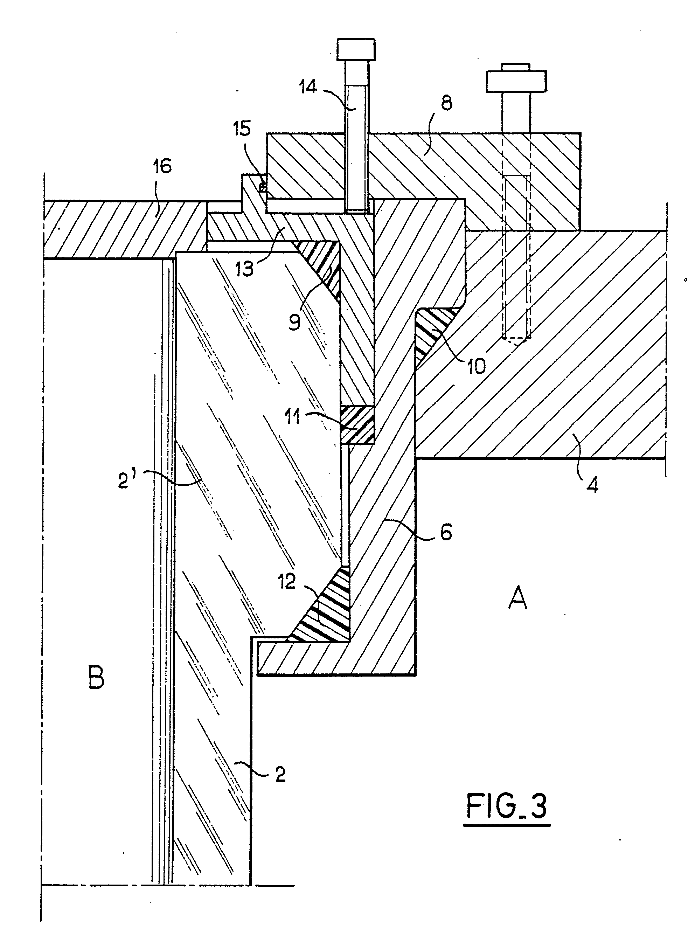

La fig. 2 montre, en coupe axiale, le détail de la partie supérieure du dispositif de la fig. 1, dans la région 6. Une partie essentielle de cette figure est reproduite à une échelle beaucoup plus grande sur la figure 3. Le tube en quartz 2 se termine ici, en haut, par un renforcement ou tête 2', formant une surépaisseur sur laquelle est appliqué un raccord métallique 6 encastré dans la fermeture supérieure 4 du réacteur cylindrique 1. Pour la clarté du dessin, ce réacteur n'est plus représenté sur la fig. 2 où l'on montre seulement une partie de sa fermeture 4 ; la lettre A rappelle que le milieu réactionnel se trouve tout autour du tube 2 représenté. Le fond du raccord 6 est serré contre la fermeture 4 entre les brides 8 et 4 à l'aide de boulons représentés, mais non repérés. Entre la portée supérieure de la tête 2' de quartz et le fond du fouloir 13 est interposé un joint torique, élastoplastique 9 ; d'autre part, l'étanchéité entre le raccord 6 et la fermeture 4 du réacteur est assurée par un autre joint torique 10 ; ce sont là des dispositions habituelles et nécessaires dans le système d'étanchéité entre tubes cassants et pièces métalliques.

L'originalité de l'invention réside en ce qu'en plus de ces joints habituels, on place un joint torique supplémentaire circonférentiellement sur la paroi latérale de la tête 2', entre cette tête et l'alésage du raccord 6, c'est un joint 11 qui est ainsi placé sur la face latérale du matériau cassant, de préférence en un endroit voisin du milieu de la hauteur du raccord 6. Dans la pratique, il est préférable que ce joint soit situé à une distance de l'ordre de 1 à 10 cm de la portée supérieure du tube 2.

Lorsque l'enceinte 2 ne comporte pas de renforcement et présente le même diamètre jusqu'à son extrémité, le raccord 6 se pose de la même façon avec un joint supplémentaire 11 sur la face latérale du tube 2.

Dans le cas plus avantageux, où le tube de quartz 2 se termine par un renforcement 2', il est fort recommandable, suivant l'invention, d'insérer en outre un joint 12 entre la naissance inférieure du renforcement de l'extrémité du raccord 6.

Comme le montre le dessin, la meilleure façon de placer les joints toriques 9 et 12 consiste à les appliquer sur une troncature oblique de la paroi extérieure de la tête 2'.

Suivant une caractéristique préférée, importante, de l'invention, un dispositif de serrage indépendant pour les joints 9 et 11 est prévu dans le raccord 6 ; ce dispositif comprend un fouloir 13 et des vis de poussée 14 pour ce fouloir. Ainsi en vissant plus ou moins les vis 14, on pousse le fouloir 13 qui écrase, dans la mesure voulue, les joints 9 et 11, et indirectement, par l'intermédiaire de 2', le joint 12. Comme d'autre part, un élément du fouloir 13 coulisse dans la bride 8, un joint 15 est interposé entre cet élément et l'alésage de la bride.

Le serrage des joints 9, 11 et 12, à l'aide du fouloir 13, étant indépendant du serrage général à l'aide de la bride 8, il est possible de le calculer théoriquement et l'ajuster au minimum nécessaire, compatible avec les propriétés mécaniques du matériau cassant, notamment le quartz pris comme exemple. Ce serrage permet le réglage simultané de la pression de contact entre les pièces et les joints 9, 11 et 12 ; la pression se trouve ainsi répartie sur chaque joint, en fonction de la souplesse élastique, résiduelle, de celui-ci ; il en résulte que le joint le plus fatigué, donc le moins souple, est le plus serré.

Le joint supplémentaire 11 a pour effet de centrer la tête 2' et éviter le contact de l'acier avec le quartz : le jeu, qui en résulte entre les parois 2' et 6, 2' et 13, 2' et 16 est visible sur la fig. 3 ; cela conduit à l'avantage suivant. Si, pour des raisons mécaniques ou thermodynamiques, la gaine 2-2' oscille sous des effets de flexion et de torsion, les pressions de contact entre les joints 9, 11, 12 et les parties métalliques 6, 16 ou/et 13 varient. Il peut en résulter des efforts d'ovalisation de la tête 2', ce qui se traduit par des flexions circonférentielles, pouvant entraîner des fuites du milieu réactionnel A. De plus, la résistance au fluage des joints 9 et 12 s'amenuisant avec le temps par cyclage pulsatoire des pressions de contact, le risque réel de fuites augmente avec ce cyclage. Or, le joint 11, suivant l'invention, placé dans la zone médiane de la hauteur de la tête 2', ne subit pas ces fluctuations : il continue donc d'assurer l'étanchéité.

La partie supérieure de la fig. 2 comporte un collecteur C de gaz, conduisant à une torche ; cette partie de l'installation n'est pas influencée par le système d'étanchéité suivant l'invention. Cette chambre est aménagée en système de détection automatique d'une fuite entre les milieux A et B.

A titre d'exemple non limitatif, le système d'étanchéité, décrit plus haut, est appliqué à un réacteur photochimique pour la production de mercaptans par l'action de l'H$_2$S sur des oléfines, sous pression. L'appareil comprend un réacteur constitué par une enveloppe cylindrique, en acier inoxydable de 23,6 cm de diamètre et 100 cm de haut (connue dans le commerce sous la dénomination 316 L). Dans l'axe de cette enveloppe est logé un émetteur de la lumière à 3 650 Å de 3 kw. La lampe de l'émetteur est alimentée par du courant électrique sous 1 800 V, et elle est placée dans une gaine en quartz de 70 mm de diamètre et d'une épaisseur de 9 mm. La puissance rayonnée à 3 650 Å est de 53 w. La luminance est de 40 mw/cm$^2$, la longueur utile du luminant étant de 500 mm.

La production de mercaptans a lieu à environ 10 °C sous une pression d'H$_2$S de 13 bars.

En général, la réaction photochimique a lieu sous des pressions comprises entre 5 et 25 bars et de préférence entre 10 et 15 bars.

L'appareil est muni des joints décrits plus haut à propos des fig. 2 et 3. Ces joints sont constitués par une âme de silicone recouverte d'une gaine de teflon ; ils présentent une dureté shore de 70 à 80, et de diamètre de chaque tore est de 9 à 10 mm.

Lorsque le joint supplémentaire 11 est présent, on ne constate jamais de fuites, ni d'explosion, par contre, en l'absence de ce joint, des fuites se produisent dès que l'appareil a fonctionné plus de 2 500 heures.

**Revendications**

1. Système perfectionné d'étanchéité entre une enceinte en matériau cassant et un appareil métallique pour la réalisation de réactions chimiques, dans lequel un raccord (6) est emmanché sur l'extrémité ouverte (2') de l'enceinte (2), avec interposition d'un joint torique (9) entre la portée de l'enceinte et le fond du raccord, caractérisé en ce qu'un joint torique, supplémentaire (11), est enserré entre la paroi latérale extérieure de l'enceinte (2, 2') et l'alésage du raccord (6).

2. Système suivant la revendication 1, caractérisé en ce que le raccord (6) est muni d'un dispositif (13) pour la compression indépendante du joint supplémentaire (11).

3. Système suivant la revendication 2, caractérisé en ce que le dispositif de compression (13) est monté de façon à servir à la compression simultanée du joint torique (9) sur la portée de l'enceinte (2') et du joint supplémentaire (11) sur la paroi latérale de l'enceinte.

4. Système suivant une des revendications 1 à 3, caractérisé en ce que le joint supplémentaire (11) est placé dans la région du milieu de la hauteur du raccord (6).

5. Système suivant une des revendications précédentes, caractérisé en ce que le joint supplémentaire se trouve à une distance d'environ 1 à 10 cm de l'extrémité de l'enceinte (2) sur laquelle repose le raccord (6).

6. Système suivant une des revendications précédentes, caractérisé en ce que l'alésage du raccord (6) présente un évidement annulaire pour le logement du joint supplémentaire (11).

7. Système suivant la revendication 6, caractérisé en ce que l'évidement s'étend depuis le fond du raccord (6) jusqu'aux environs de la moitié de la hauteur de l'alésage du raccord, pour servir de logement à un fouloir (13) du dispositif de compression, cet évidement se terminant par un épaulement pour supporter le joint torique, supplémentaire (11).

8. Système suivant une des revendications précédentes, caractérisé en ce qu'un troisième joint torique (12) est placé entre la paroi latérale de l'enceinte (2, 2') et le bout du raccord (6), ce joint pouvant être comprimé par la tête (2') sous l'effet du fouloir (13).

9. Système suivant une des revendications précédentes, dans lequel la partie raccordée de l'enceinte (2) présente un renforcement ou tête (2'), caractérisé en ce que les joints, placés aux extrémités de cette tête, reposent sur des troncatures des bords du renforcement (2').

10. Système suivant une des revendications précédentes, caractérisé en ce que les joints toriques sont constitués par une âme de silicone revêtue de polytétrafluoroéthylène.

11. Application du système, suivant une des revendications 1 à 10, à la réalisation de l'étanchéité entre l'enceinte en quartz ou en verre spécial, renfermant une source de radiations pour la catalyse de l'halogénation d'un hydrocarbure ou de la fixation de l'H$_2$S sur un hydrocarbure.

12. Application du système suivant la revendication 11, caractérisée en ce que la réaction photochimique a lieu sous des pressions comprises entre 5 et 25 bars et de préférence entre 10 et 15 bars.

13. Application suivant la revendication 11 ou 12, caractérisée en ce que le système comporte des moyens de détection de fuites (C).

**Claims**

1. Improved sealing system between an enclosure of fragile material and a metal apparatus for carrying out chemical reactions, in which a connection member (6) is attached to the open end (2') of the enclosure (2), with the interposition of a toroidal joint (9) between the inlet to the enclosure and the base of the connection member, characterised in that a supplementary toroidal joint (11) is inserted between the exterior lateral wall of the enclosure (2, 2') and the bore of the connection member (6).

2. System according to claim 1, characterised in that the connection member (6) is provided with a device (13) for independent compression of the supplementary joint (11).

3. System according to claim 2, characterised in that the compression device (13) is mounted so as to cause simultaneous compression of the toroidal joint (9) on the inlet to the enclosure (2') and of the supplementary joint (11) on the lateral wall of the enclosure.

4. System according to any of claims 1 to 3, characterised in that the supplementary joint (11) is placed in the region of the middle of the height of the connection member (6).

5. System according to any of the preceding claims, characterised in that the supplementary joint is located at a distance of about 1 to 10 cm from the end of the enclosure (2) on which the connection member (6) rests.

6. System according to any of the preceding claims, characterised in that the bore of the connection member (6) has an annular recess for location of the supplementary joint (11).

7. System according to claim 6, characterised in that the recess extends from the base of the connection member (6) to about half the height of the bore of the connection member, for locating a compression member (13) of the compression device, the recess terminating in a shoulder for supporting the supplementary toroidal joint (11).

8. System according to any of the preceding claims, characterised in that a third toroidal joint (12) is located between the lateral wall of the enclosure (2, 2') and the end of the connection member (6), such joint being compressible by the head (2') under the action of the compression member (13).

9. System according to any of the preceding claims, in which the connecting part of the enclosure (2) has a reinforcement or head (2'), characterised in that the joints placed at the ends of this head rest on chamfers at the ends of the reinforcement (2').

10. System according to any of the preceding claims, characterised in that the toroidal joints comprise a silicone core covered with polytetrafluoroethylene.

11. Application of the system according to any of claims 1 to 10 to effecting sealing with a quartz or special glass enclosure, containing a source of radiation for the catalysis of the halogenation of a hydrocarbon or the fixation of $H_2S$ to a hydrocarbon.

12. Application of the system according to claim 11, characterised in that the photochemical reaction takes place under pressures ranging from 5 to 25 bars and preferably from 10 to 15 bars.

13. Application according to claim 11 or 12, characterised in that the system comprises means for the detection of leakages (C).

## Patentansprüche

1. Dichtigkeitssystem zwischen einem Behälter aus zerbrechlichem Material und einem metallischen Apparat zur Durchführung chemischer Reaktionen, in welchem ein Anschlußstück (6) auf das offene Ende (2') des Behälters (2) aufgeschoben ist unter Zwischenschaltung eines Dichtungsringes (9) zwischen der Auflagefläche des Behälters und dem Boden des Anschlußstücks, dadurch gekennzeichnet, daß ein zusätzlicher Dichtungsring (11) zwischen der äußeren Seitenwand des Behälters (2, 2') und der Bohrung des Anschlußstücks (6) eingespannt ist.

2. System nach Anspruch 1, dadurch gekennzeichnet, daß das Anschlußstück (6) mit einer Vorrichtung (13) zur unabhängigen Verdichtung der zusätzlichen Dichtung (11) versehen ist.

3. System nach Anspruch 2, dadurch gekennzeichnet, daß die Verdichtungsvorrichtung (13) so angeordnet ist, daß sie zur gleichzeitigen Verdichtung des Dichtungsringes (9) gegen die Auflagefläche des Behälters (2') und der zusätzlichen Dichtung (11) gegen die Seitenwand des Behälters dient.

4. System nach einem der Ansprüche 1 bis 3, dadurch gekennzeichnet, daß die zusätzliche Dichtung (11) in dem Bereich der Mitte der Höhe des Anschlußstückes (6) angeordnet ist.

5. System nach einem der vorangehenden Ansprüche, dadurch gekennzeichnet, daß die zusätzliche Dichtung sich in einem Abstand von etwa 1 bis 10 cm von dem Ende des Behälters (2) befindet, auf welches das Anschlußstück (6) aufruht.

6. System nach einem der vorangehenden Ansprüche, dadurch gekennzeichnet, daß die Bohrung des Anschlußstückes (6) eine ringförmige Ausnehmung zur Aufnahme der zusätzlichen Dichtung (11) aufweist.

7. System nach Anspruch 6, dadurch gekennzeichnet, daß sich die Ausnehmung vom Boden des Anschlußstückes (6) bis etwa zur Mitte der Höhe der Bohrung des Anschlußstückes erstreckt, um zur Aufnahme eines Stauchers (13) der Verdichtungsvorrichtung zu dienen, welche Ausnehmung mit einer Schulter endet zur Auflagerung des zusätzlichen Dichtungsringes (11).

8. System nach einem der vorangehenden Ansprüche, dadurch gekennzeichnet, daß ein dritter Dichtungsring (12) zwischen der Seitenwand des Behälters (2, 2') und dem Ende des Anschlußstückes (6) angeordnet ist und durch den Kopf (2') unter der Wirkung des Stauchers (13) verdichtet werden kann.

9. System nach einem der vorangehenden Ansprüche, bei welchem der angeschlossene Teil des Behälters (2) eine Verstärkung bzw. einen Kopf (2') aufweist, dadurch gekennzeichnet, daß die an den Enden dieses Kopfes angeordneten Dichtungen auf kegeligen Endstücken der Ränder der Verstärkung (2') aufruhen.

10. System nach einem der vorangehenden Ansprüche, dadurch gekennzeichnet, daß die Dichtungsringe durch einen Silikonkern gebildet werden, der mit Polytetrafluoräthylen beschichtet ist.

11. Anwendung des Systems nach einem der Ansprüche 1 bis 10 zur Herstellung der Dichtheit zwischen dem Behälter aus Quarz oder einem Spezialglas enthaltend eine Quelle von Strahlungen zur Katalyse der Halogenisierung eines Kohlenwasserstoffs oder der Bindung des $H_2S$ an einen Kohlenwasserstoff.

12. Anwendung des Systems nach Anspruch 11, dadurch gekennzeichnet, daß die photochemische Reaktion unter Drücken zwischen 5 und 25 bar und vorzugsweise zwischen 10 und 15 bar stattfindet.

13. Anwendung nach den Ansprüchen 11 und 12, dadurch gekennzeichnet, daß das System Mittel zur Entdeckung von Undichtigkeiten (C) aufweist.

## FIG_1

FIG. 2

FIG_3